# EUROPEAN PATENT SPECIFICATION

(11) **EP 3 175 295 B1**
(45) Date of publication and mention of the grant of the patent: **30.12.2020**
(21) Application number: 15741543.1
(22) Date of filing: 23.07.2015
(51) Int. Cl.: G03B 21/20, H04N 9/31, H04N 5/74, G03B 21/00

(54) **PROJECTION SYSTEM**
PROJEKTIONSSYSTEM
SYSTEME POUR PROJECTEUR

(30) Priority: 01.08.2014 CN 201410376860
(43) Date of publication of application: 07.06.2017
(73) Proprietor: OSRAM GmbH, 80807 München (DE)
(72) Inventor: DING, Yi, Kunshan 215300 (CN); MAO, Junwei, Kunshan 215300 (CN); KANG, Qing, Kunshan 215300 (CN)
(74) Representative: OSRAM GmbH - GC IP
(86) International application number: PCT/EP2015/066869
(87) International publication number: WO 2016/016083

(56) References cited:
- EP-A1- 2 670 144
- WO-A1-2008/054988
- US-A1- 2004 114 250
- US-A1- 2005 237 488
- US-A1- 2005 280 783
- US-A1- 2007 046 898

## Description

### TECHNICAL FIELD

The invention relates to a projection system, and particularly to a projection system capable of effecting local dimming and uniform illumination.

### BACKGROUND ART

Presently, local dimming technology has been widely adopted in a flat display device (e.g. a liquid crystal television), so as to reduce power consumption of a backlight source. In a projection system (e.g. a projector), however, application of local dimming technology is still very limited.

Local dimming technology refers to adjusting a backlight source according to lightness or darkness of a displayed image, thereby enabling brightness of a bright area part in the displayed image to be maximum, while enabling brightness of a dark area part in the displayed image to be reduced, or even turning off a backlight source corresponding to the dark area part. In this way, optimal image contrast is achieved, and meanwhile power consumption of a backlight source can be reduced.

In addition, in a projection system, it is a basic performance requirement to enable light emitted from a backlight source to make a uniform illumination on a light modulator, thereby effecting a uniform projection of illumination on a screen.

Therefore, a projection system capable of simultaneously effecting local dimming and uniform illumination is desired.
EP 2 670 144 A1 discloses a zonal illumination system for use in a projector. The zonal illumination system comprises a source of illumination and a first modulation stage (zonal imaging device) for dividing light from the source of illumination into a plurality of zones having respective light intensities. The light modulated by the zonal imaging device is applied to an illumination optical system composed of a integrating rod array which, in turn, projects the spatially variable pattern of light onto an imaging devices for generating the final image.

### SUMMARY OF THE INVENTION

Brief descriptions of the invention will be made hereinafter, so as to provide basic understandings to some aspects of the invention. It should be understood that such brief descriptions are not enumerative descriptions in regard to the invention. The brief descriptions neither intend to determine the key or important parts of the invention nor intend to limit the scope of the invention, but aim only to provide some concepts in a simplified manner to serve as a preamble of more detailed descriptions provided later.

A projection system according to one embodiment of the invention comprises: at least two emitting surface groups, which each comprise a plurality of emitting surfaces emitting light in different colors; a light modulator; an illumination optical system arranged between the at least two emitting surface groups and the light modulator, the illumination optical system comprising at least two optical paths which correspond to the at least two emitting surface groups respectively, light emitted from each of the emitting surface groups making a uniform illumination on a specific input region of the light modulator by passing through an optical path corresponding thereto; wherein respective input regions on the light modulator which are illuminated by the light emitted from the respective emitting surface groups do not 100% overlap each other and a light source controller, which adjusts brightness and/or color ratio of illumination on a corresponding input region of the light modulator by individually controlling at least one of the emitting surface groups, wherein the illumination optical system comprises at least two freeform lenses corresponding to the at least two emitting surface groups respectively, each of the freeform lenses forms a part of each of the optical paths, the light emitted from each of the emitting surface groups makes a uniform illumination on the specific input region of the light modulator by passing through a freeform lens corresponding thereto.

An illumination optical system according to an example comprises a rod array and one or more lenses.

An illumination optical system according to an example comprises a fly-eye lens array and a focusing lens array.

An illumination optical system according to one embodiment of the invention comprises at least two freeform lenses.

An illumination optical system according to an example comprises at least two focusing lenses and a diffuser/micro-lens array.

A projection system according to one embodiment of the invention further comprises a filter or a wavelength conversion material. Light output through the filter or the wavelength conversion material is time sequential or continuous.

The light source controller individually adjusts brightness and/or color ratio of light emitted from the emitting surface groups including a specific emitting surface by individually adjusting power of the specific light emitting surface.

Respective input regions on the light modulator which are illuminated by the light emitted from the respective emitting surface groups do not 100% overlap each other.

A light modulator according to one embodiment of the invention is a Digital Microlens Device (DMD), a Liquid Crystal Display (LCD), or a Liquid Crystal on Silicon (LCoS). The emitting surface according to the invention comprises Light Emitting Diodes LEDs. The wavelength conversion material according to the invention is a fluorescent material or quantum dots.

### BRIEF DESCRIPTION OF THE DRAWINGS

The invention would be better understood from the descriptions made with reference to the appended drawings hereinafter, wherein identical or similar components are denoted by using identical or similar reference signs throughout the appended drawings. The appended drawings, together with the following detailed descriptions, are included in the specification and form a part of the specification, and are further used to describe preferred embodiments of the invention and explain the principle and advantages of the invention. In the appended drawings:
FIG. 1 is a block diagram of a projection system according to the invention;
FIG 2 is a schematic view of an example of an illumination optical system;
FIG 3 is a schematic view of an example of an illumination optical system;
FIG. 4 is a schematic view of an illumination optical system according to an embodiment of the invention;
FIG. 5 is a schematic view of an example of an illumination optical system;
FIG. 6 is a block diagram of a projection system according to a modified embodiment of the invention.

### DETAILED DESCRIPTION OF THE EMBODIMENTS

Hereinafter, the projection system according to the invention will be described by taking a projector as an example. However, it should be understood that the invention is not limited only to a projector but includes all devices or systems in which projection technology is employed.

Generally, a backlight source of a projector does not include only one emitting surface, but includes a plurality of emitting surfaces, which may be divided into groups. Thus a backlight source may comprise a plurality of emitting surface groups. A plurality of emitting surfaces are included in each emitting surface group and usually arranged in the form of an array, for example, in a matrix like fashion. In some cases, an emitting surface may be implemented with light emitting diodes (LEDs), and a backlight source may comprise a plurality of LED arrays, each LED array comprising a plurality of LEDs, and each LED array corresponding to a certain specific region on a light modulator and a certain specific region on a screen. Each LED is provided with an independent drive, making it possible to independently adjust power of each LED. It should be noted that, although emitting surfaces are exemplarily described as LEDs herein, they are not limited to LEDs. Actually, there exist a number of other ways for embodying the emitting surfaces according to the invention. Therefore, terms "emitting surface" and "emitting surface group", instead of terms "LED" or "LED array", will be used hereinafter so as to avoid excessive limitations to the invention.

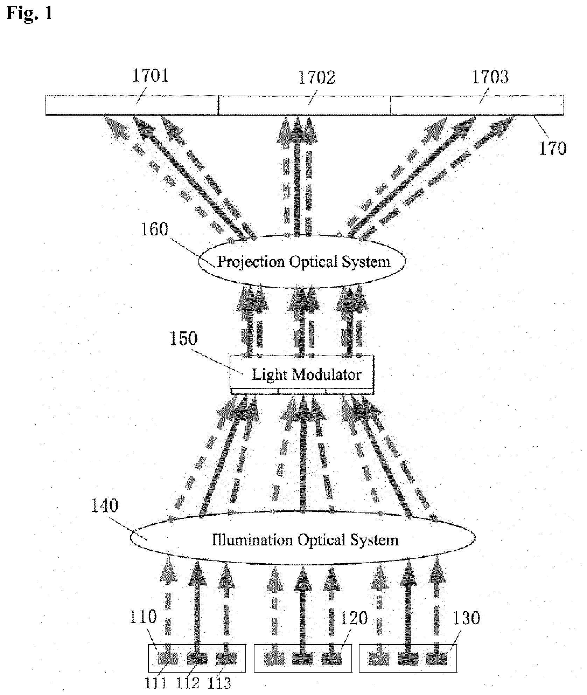

Referring to FIG. 1, emitting surfaces 111, 112 and 113 form an emitting surface group 110, and each of the emitting surfaces emits light in a single color. In FIG. 1, lines of different types are used to indicate light emitted from different emitting surfaces, wherein short dashed lines indicate light (e.g. red light) emitted from the emitting surface 111, real lines indicate light (e.g. green light) emitted from the emitting surface 112, and long dashed lines indicate light (e.g. blue light) emitted from the emitting surface 113. In this way, FIG 1 shows three emitting surface groups 110, 120 and 130, each of which comprises three emitting surfaces. It should be noted that, the manner of forming the emitting surface groups herein is only exemplary, and the invention is not limited to this manner. Light emitted from each emitting surface group makes an illumination on a specific input region of a light modulator 150 after passing through an illumination optical system 140, and then is projected onto a corresponding region on a screen 170 by a projection optical system 160. The illumination optical system 140 is mainly used for improving effective utilization rate of light from a backlight to the light modulator 150, and for making it possible to obtain a uniform illumination on the light modulator 150, which will be described in detail hereinafter. The light modulator 150 comprises, but is not limited to, a Digital Microlens Device (DMD), a Liquid Crystal Display (LCD), and a Liquid Crystal on Silicon (LCoS). The projection optical system 160 is used for projecting an output from the light modulator 150 onto the screen 170. Various techniques well-known in the art may be adopted to implement the projection optical system 160 according to the invention.

As shown in FIG. 1, light emitted from the emitting surface groups 110, 120 and 130 sequentially passes through the illumination optical system 140, the light modulator 150 and the projection optical system 160, and is ultimately projected onto corresponding regions 1701, 1702 and 1703 on the screen 170 respectively. The respective input regions (hereinafter referred to as "sub-regions") (not shown) on the light modulator 150 which are illuminated by the respective emitting surface groups do not 100% overlap each other, and correspondingly, the respective regions 1701, 1702 and 1703 on the screen 170 do not 100% overlap each other either. When in operation and light emitting, light emitted from the respective emitting surface groups together fill out the entire surface of the light modulator 150.

Each emitting surface emits light in a specific color, and each emitting surface group comprises a plurality of emitting surfaces. Therefore, the light emitted from each emitting surface group may comprise a plurality of primary colors, and the number of the primary colors corresponds to the number of the emitting surfaces. For example, FIG. 1 shows that the emitting surface group 110 comprises three emitting surfaces 111, 112 and 113, so the light emitted from the emitting surface group 110 may comprise three primary colors, for example, but not limited to red, green and blue. Light containing the three primary colors makes an illumination on the light modulator 150 after passing through the illumination optical system 140, and the three primary colors are mixed with each other on the light modulator 150, thereby generating light in desired colors.

As stated above, since power of each emitting surface can be adjusted separately, brightness of light emitted by the emitting surface can be changed separately, and correspondingly, brightness of light emitted from the respective emitting surface groups can also be changed independently upon each other. In this case, when a certain region on the screen 170 is a dark region, that is, does not need too much illumination, power of one or more emitting surface groups corresponding to the region can be reduced, so as to dim down light emitted from the emitting surface groups, or even to turn off the corresponding emitting surface groups, thereby increasing contrast of an image displayed on the screen, and also making it possible to reduce power consumption of the backlight source.

In addition, since each emitting surface emits light in a specific color, it is made possible to achieve different color ratio in the light emitted from an emitting surface group by adjusting power of each emitting surface individually. Specifically, assuming that the emitting surfaces 111, 12 and 113 emit light in red, green and blue respectively, by reducing power of the emitting surface 112 independently, it is made possible to weaken the light in green emitted from the emitting surface 112. In this way, when the light in the three primary colors emitted by the emitting surface group 110 is mixed on the light modulator 150, mixed light containing green light in a relatively small percentage and red light and green light in relative greater percentages will be generated. In this way, it is made possible to obtain any desired color ratio by adjusting each emitting surface independently. For example, assuming that an image to be projected onto the screen 170 is a scenery image, whose upper half is blue sky and whose lower half is grassland, by adopting the above method it is made possible to enhance a blue light component of emitting surface groups corresponding to the upper half of the image, and to enhance a green light component of emitting surface groups corresponding to the lower half of the image, thereby improving chromaticity and contrast of the projected image.

The foregoing describes performing local dimming in the projection system according to the invention. According to the embodiment of the invention, by effecting local dimming in the projection system, it is made possible to produce at least one of the effects of: improving contrast and chromaticity of a projected image, reducing power consumption, and extending the life time for a backlight source and the whole projection system.

Hereinafter, another aspect of the invention will be described, that is, a uniform illumination is effected on the light modulator 150, thereby producing an excellent projection effect. To achieve this object, the invention proposes the following manners:

### Solid Rod array +Lens

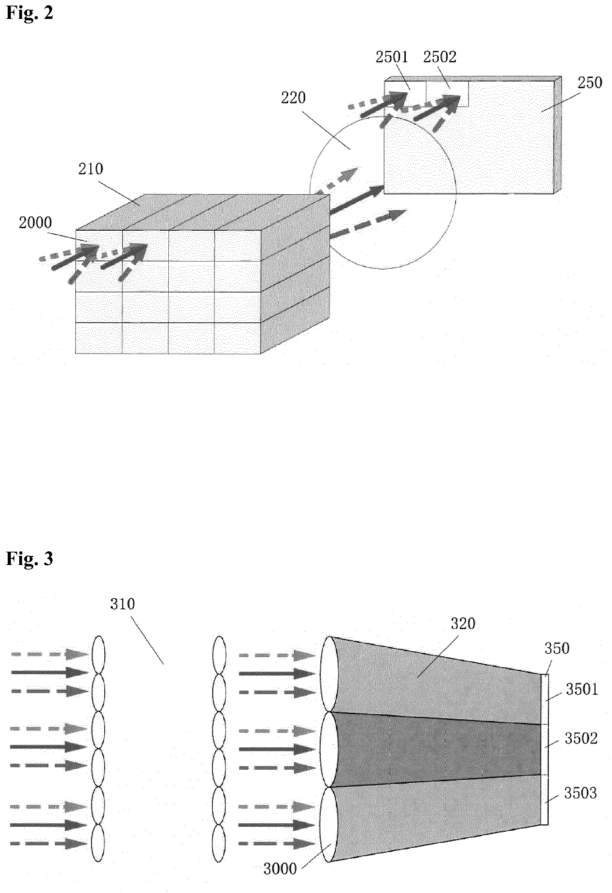

The example as shown in FIG. 2 includes a solid rod array 210 and an optical lens 220, which constitute a part of the illumination optical system 140 as shown in FIG. 1. As shown in FIG. 2, a solid rod 2000 is arranged corresponding to one emitting surface group. A plurality of the solid rods 2000 are combined together to form the rod array 210. Methods for the combination include but are not limited to adhesion or use of mechanical parts. A person skilled in the art would readily conceive of various combination methods for achieving the same object. In addition, an optical lens 220 is further arranged between the rod array 210 and the light modulator 250. It should be noted that the lens 220 according to the embodiment may be a set of lens units although FIG. 2 shows a single lens.

With this configuration, the light emitted from the respective emitting surface groups first passes through the corresponding rods 2000 in the rod array 210, and then the output of each rod 2000 is imaged by the optical lens 220 onto a corresponding sub-region 2501, 2502 on the light modulator 250, thereby generating a uniform illumination on the light modulator 250. That is, the light emitted from each emitting surface group makes an illumination on a certain sub-region on the light modulator 250 by passing through an optical path corresponding thereto.

As shown in FIG. 2, the whole input region of the light modulator 250 may comprise a plurality of sub-regions similar to sub-regions 2501 and 2502. As stated above, since the brightness and the color ratio of the light emitted by each emitting surface group can be adjusted independently, the brightness and the color ratio of the illumination on each sub-region 2501, 2502 can also be changed correspondingly. Referring back to FIG. 1, after passing through the light modulator 250, the light emitted from each emitting surface group is further projected onto the respective regions 1701, 1702 and 1702 of the screen 170 respectively. Therefore, the brightness and the color ratio of the illumination on the respective regions 1701, 1702 and 1703 of the screen 170 can also be changed correspondingly.

The rod array as shown in FIG 2 may be used for generating a uniform illumination on a DMD panel, while performing the function of local dimming.

### Fly-eye Lens Array + Focusing Lens Array

The example as shown in FIG. 3 includes a fly-eye lens array 310 and a focusing lens array 320, which constitute a part of the illumination optical system 140 as shown in FIG 1. As shown in FIG. 3, the focusing lens array 320 comprises a plurality of focusing lenslets 3000, which each corresponds to one emitting surface group 110, 120, 130 in a backlight source. With this configuration, light emitted from the respective emitting surface groups first passes through the fly-eye lens array 310, and then passes through corresponding focusing lenslets 3000, thereby making an illumination on respective sub-regions 3501, 3502 and 3503. That is, light emitted from each emitting surface group makes an illumination on a certain specific sub-region on a light modulator 350 by passing through an optical path corresponding thereto. The focusing lenslets 3000 make it possible to obtain a uniform illumination on sub-regions of the light modulator 350. In addition, in order to obtain acceptable uniformity of illumination, it is also necessary to enable lenses in the fly-eye lens array 310 to be small enough.

Since the brightness and the color ratio of the light emitted by each emitting surface group can be adjusted independently, the brightness and the color ratio of the illumination on each sub-region 3501, 3502, 3503 of the light modulator 350 can be changed independently, and correspondingly, the brightness and the color ratio of the light ultimately projected onto the respective regions of the screen 170 can also be changed independently.

The fly-eye lens array 310 and the focusing lens array 320 as shown in FIG. 3 are used for generating a uniform illumination on an LCD or LCoS panel, while performing the function of local dimming.

### Freeform Lens

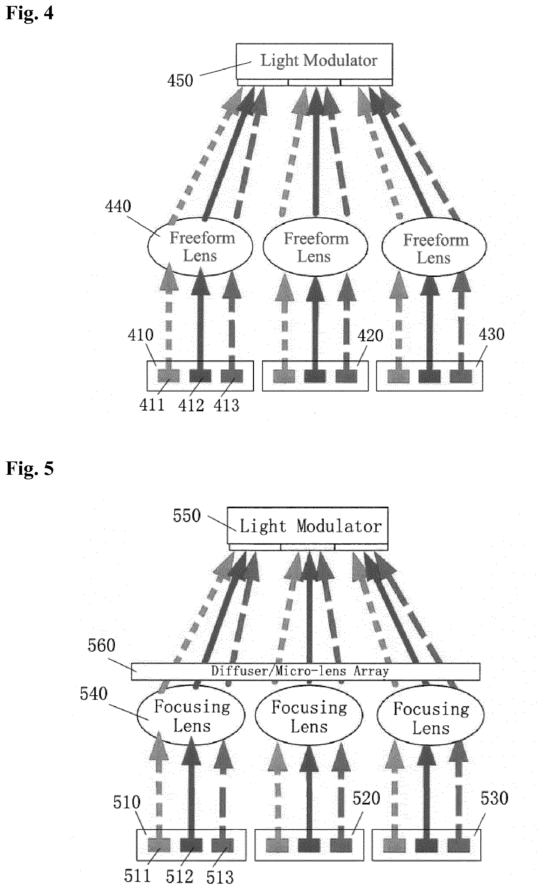

In the embodiment of the invention shown in FIG. 4, a freeform lens 440 may be arranged corresponding to each emitting surface group 410, 420, 430. The freeform lens refers to such a lens that at least one of two surfaces of the lens is freeform. The freeform lens 440 focuses the light emitted from the respective emitting surface groups onto the respective sub-regions on the light modulator side by side, and meanwhile can ensure uniformity of illumination. That is, the light emitted from each emitting surface group makes an illumination on a certain specific sub-region on a light modulator 450 by passing through an optical path corresponding thereto (i.e. a freeform lens corresponding thereto).

Since the brightness and the color ratio of the light emitted by each emitting surface group can be adjusted independently, the brightness and the color ratio of light illuminated onto each sub-region of the light modulator 450 through a corresponding freeform lens 440 can also be changed independently, and correspondingly, the brightness and the color ratio of the light ultimately projected onto the respective regions of the screen 170 can also be changed independently.

The freeform lens 440 may be used for generating a uniform illumination on a DMD, LCD or LCoS panel, while performing the function of local dimming.

### Focusing Lens + Diffuser/Micro-lens Array

FIG. 5 shows an example of arranging focusing lenses 540 and a diffuser/micro-lens array 560 between a backlight and a light modulator 550, wherein for each emitting surface group 510, 520, 530, a focusing lens 540 is arranged corresponding thereto, so light emitted from the respective emitting surface groups is focused by the focusing lenses 540 to respective sub-regions of the light modulator 550 side by side. In addition, a diffuser/micro-lens array 560 is further arranged between the focusing lenses 540 and the light modulator 550, such that light passing through the focusing lenses 540 is further uniformized, thereby making it possible to obtain better uniformity of illumination on the light modulator 550. As shown in FIG. 5, light emitted from each emitting surface group 510, 520, 530 makes an illumination on a certain specific sub-region of the light modulator 550 by passing through an optical path corresponding thereto.

Since the brightness and the color ratio of the light emitted by each emitting surface group can be adjusted independently, the brightness and the color ratio of light illuminated onto each sub-region of the light modulator 550 through a corresponding focusing lens 540 can also be changed independently, and correspondingly, the brightness and the color ratio of the light ultimately projected onto the respective regions of the screen 170 can also be changed independently.

The diffuser/micro-lens array 560 may be used for generating a uniform illumination on a DMD, LCD or LCoS panel, while performing the function of local dimming.

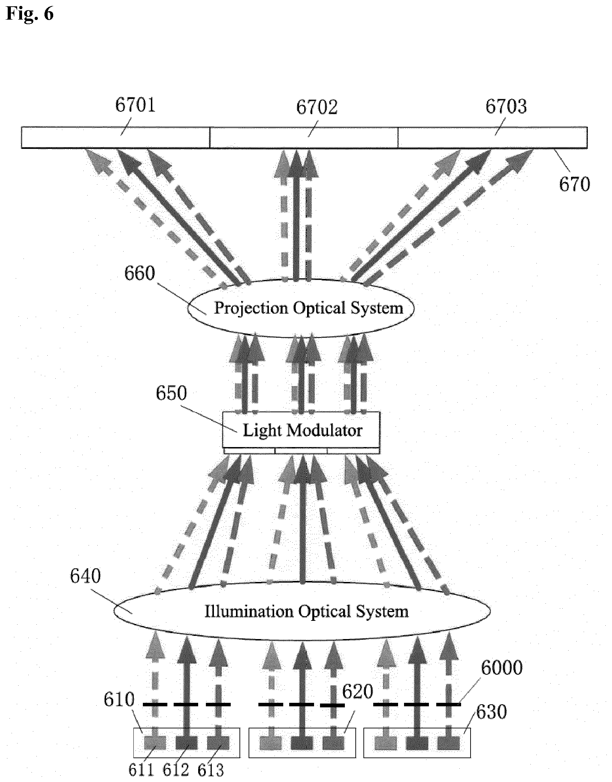

FIG. 6 shows a modified embodiment of the projection system according to the invention. In FIG. 6, repeated descriptions in regard to elements identical with those shown in FIG. 1 will be omitted. Hereinafter, differences of the projection system as shown in FIG 6 from that as shown in FIG. 1 will be discussed.

As shown in FIG 6, a filter or a wavelength conversion material 6000 is further arranged between emitting surface groups 610, 620 and 630 and an illumination optical system 640, for converting light emitted from the emitting surface groups 610, 620 and 630 into light in desired colors. The wavelength conversion material 6000 for example may be a fluorescent material, or quantum dots, or other materials or techniques capable of performing similar functions, and the invention is not limited thereto.

After the light emitted from the emitting surface groups passes through the filter or the wavelength conversion material 6000, the light may be time sequential or continuous. The term "time sequential" refers to that only one color is present at the same time, and it is mainly applied in a single-chip DLP/LCD/LCoS. The term "continuous" refers to that all colors are present at the same time, and it is mainly applied in a three-chip DLP/LCD/LCoS.

The configuration of the projection system according to the invention has been described with reference to the appended drawings in detail. The projection system according to the invention may produce the following technical effects:

By applying different power to respective emitting surfaces, it is made possible to easily control brightness and color ratio of light emitted by an emitting surface group. Accordingly, brightness and color ratio of illumination of the emitting surface group on a corresponding sub-region on a light modulator can also be adjusted correspondingly.

When an image on the screen is relatively dark in a certain region, brightness of light emitted by one or more emitting surface groups corresponding to the region can be reduced, thereby increasing contrast of the image and reducing power consumption of a backlight source. In addition, since absorption of energy from the backlight source is reduced for the light modulator and its cooperated filter, the life time for the whole projection system is also extended.

When a certain part of the image on the screen does not need a specific color, or needs a specific color having a small ratio, one or more emitting surfaces corresponding to the specific color may be dimmed down, and thus the desired color ratio may be obtained easily.

In addition, by arranging the illumination optical system as described with reference to FIGS. 2-5, a uniform illumination can be obtained on a light modulator, thereby improving the effect of projection of an image on the screen.

## Claims

1. A projection system, comprising:
at least two emitting surface groups (410; 420; 430), which each comprise a plurality of emitting surfaces emitting (411, 412, 413) light in different colors;
a light modulator (450);
an illumination optical system arranged between the at least two emitting surface groups (410; 420; 430) and the light modulator (450), the illumination optical system comprising at least two optical paths which correspond to the at least two emitting surface groups respectively, light emitted from each of the emitting surface groups (410; 420; 430) making a uniform illumination on a specific input region of the light modulator (450) by passing through an optical path corresponding thereto, wherein respective input regions on the light modulator (450) which are illuminated by the light emitted from the respective emitting surface groups (410; 420; 430) do not 100% overlap each other; and
a light source controller, which adjusts brightness and/or color ratio of illumination on a corresponding input region of the light modulator (450) by individually controlling at least one of the emitting surface groups (410; 420; 430),
**characterized in that**,
the illumination optical system comprises at least two freeform lenses (440) corresponding to the at least two emitting surface groups (410; 420; 430) respectively, each of the freeform lenses (440) forms a part of each of the optical paths, the light emitted from each of the emitting surface groups (410; 420; 430) makes a uniform illumination on the specific input region of the light modulator (450) by passing through a freeform lens (440) corresponding thereto.

2. The projection system according to claim 1, wherein a filter or a wavelength conversion material (6000) is further arranged between the emitting surface groups (610; 620; 630) and the illumination optical system (640).

3. The projection system according to claim 2, wherein the wavelength conversion material is a fluorescent material or quantum dots.

4. The projection system according to claim 1, wherein the light source controller is further configured to individually adjust brightness and/or color ratio of light emitted from the emitting surface groups including a specific emitting surface by individually adjusting power of the specific light emitting surface.

5. The projection system according to claim 1, wherein the light modulator is a Digital Microlens Device DMD, a Liquid Crystal Display LCD, or a Liquid Crystal on Silicon LCoS.

6. The projection system according to claim 1, wherein the emitting surface comprises Light Emitting Diodes LEDs.

## Patentansprüche

1. Projektionssystem, Folgendes umfassend:
mindestens zwei emittierende Oberflächengruppen (410; 420; 430), die jede mehrere emittierende Oberflächen umfassen, die (411, 412, 413) Licht in verschiedenen Farben emittieren;
einen Lichtmodulator (450);
ein optisches Beleuchtungssystem, das zwischen den mindestens zwei emittierenden Oberflächengruppen (410; 420; 430) und dem Lichtmodulator (450) angeordnet ist, wobei das optische Beleuchtungssystem mindestens zwei optische Pfade umfasst, die jeweils den mindestens zwei emittierenden Oberflächengruppen entsprechen, wobei Licht, das aus jeder der emittierenden Oberflächengruppen (410; 420; 430) emittiert wird, eine gleichmäßige Beleuchtung auf einem spezifischen Eingangsbereich des Lichtmodulators (450) herstellt, indem es durch einen dazu entsprechenden optischen Pfad durchgelassen wird, wobei jeweilige Eingangsbereiche auf dem Lichtmodulator (450), die durch das Licht beleuchtet werden, das aus den jeweiligen emittierenden Oberflächengruppen (410; 420; 430) emittiert wird, einander nicht zu 100 % überlappen; und
eine Lichtquellensteuervorrichtung, die Helligkeit und/oder Farbverhältnis einer Beleuchtung auf einem entsprechenden Eingangsbereich des Lichtmodulators (450) durch individuelles Steuern von mindestens einer der emittierenden Oberflächengruppen (410; 420; 430) einstellt,
**dadurch gekennzeichnet, dass**
das optische Beleuchtungssystem mindestens zwei Freiformlinsen (440) umfasst, die jeweils den mindestens zwei emittierenden Oberflächengruppen (410; 420; 430) entsprechen, jede der Freiformlinsen (440) einen Teil jedes der optischen Pfade ausbildet, das Licht, das aus jedem der emittierenden Oberflächengruppen (410; 420; 430) emittiert wird, eine gleichmäßige Beleuchtung auf dem spezifischen Eingangsbereich des Lichtmodulators (450) herstellt, indem es durch eine dazu entsprechende Freiformlinse (440) durchgelassen wird.

2. Projektionssystem nach Anspruch 1, wobei weiterhin ein Filter oder ein Wellenlängenumwandlungsmaterial (6000) zwischen den emittierenden Oberflächengruppen (610; 620; 630) und dem optischen Beleuchtungssystem (640) angeordnet ist.

3. Projektionssystem nach Anspruch 2, wobei das Wellenlängenumwandlungsmaterial ein Leuchtstoffmaterial oder Quantenpunkte ist.

4. Projektionssystem nach Anspruch 1, wobei die Lichtquellensteuervorrichtung weiterhin eingerichtet ist, um Helligkeit und/oder Farbverhältnis von Licht, das aus den emittierenden Oberflächengruppen emittiert wird, die eine spezifische emittierende Oberfläche umfassen, individuell einzustellen, indem eine Leistung der spezifischen lichtemittierenden Oberfläche individuell eingestellt wird.

5. Projektionssystem nach Anspruch 1, wobei der Lichtmodulator eine digitale Mikrolinsenvorrichtung DMD, eine Flüssigkristallanzeige LCD oder ein Flüssigkristall auf Silizium LCoS ist.

6. Projektionssystem nach Anspruch 1, wobei die emittierende Oberfläche lichtemittierende Dioden LEDs umfasst.

## Revendications

1. Système de projection, comprenant :
au moins deux groupes de surfaces d'émission (410; 420; 430), qui comprennent chacun une pluralité de surfaces d'émission émettant (411; 412; 413) de la lumière dans différentes couleurs,
un modulateur de lumière (450),
un système optique d'éclairage agencé entre les au moins deux groupes de surfaces d'émission (410; 420; 430) et le modulateur de lumière (450), le système optique d'éclairage comprenant au moins deux chemins optiques qui correspondent respectivement aux au moins deux groupes de surfaces d'émission, la lumière émise à partir de chacun des groupes de surfaces d'émission (410; 420; 430) réalisant un éclairage uniforme sur une zone en entrée spécifique du modulateur de lumière (450) en passant par un chemin optique correspondant à celle-ci, des zones en entrée respectives sur le modulateur de lumière (450) qui sont éclairées par la lumière émise à partir des groupes de surfaces d'émission respectifs (410; 420; 430) ne se chevauchant pas les unes les autres à 100%, et
un dispositif de commande de source lumineuse, qui ajuste la luminosité et/ou le rapport chromatique de l'éclairage sur une zone en entrée correspondante du modulateur de lumière (450) par la commande individuelle d'au moins un des groupes de surfaces d'émission (410; 420; 430),
**caractérisé en ce que** :
le système optique d'éclairage comprend au moins deux lentilles de forme libre (440) correspondant respectivement aux au moins deux groupes de surfaces d'émission (410; 420; 430), chacune des lentilles de forme libre (440) forme une partie de chacun des chemins optiques, la lumière émise à partir de chacun des groupes de surfaces d'émission (410; 420; 430) réalise un éclairage uniforme sur la zone en entrée spécifique du modulateur de lumière (450) en passant par une lentille de forme libre (440) correspondant à celle-ci.

2. Système de projection selon la revendication 1, dans lequel un filtre ou un matériau de conversion de longueur d'onde (6000) est agencé en outre entre les groupes de surfaces d'émission (610; 620; 630) et le système optique d'éclairage (640).

3. Système de projection selon la revendication 2, dans lequel le matériau de conversion de longueur d'onde est un matériau fluorescent ou des boîtes quantiques.

4. Système de projection selon la revendication 1, dans lequel le dispositif de commande de source lumineuse est configuré en outre de façon à ajuster individuellement la luminosité et/ou le rapport chromatique de la lumière émise à partir des groupes de surfaces d'émission comprenant une surface d'émission spécifique par l'ajustement individuel d'une puissance de la surface d'émission de lumière spécifique.

5. Système de projection selon la revendication 1, dans lequel le modulateur de lumière est un dispositif à microlentilles numérique, DMD, un dispositif d'affichage à cristaux liquides, LCD, ou des cristaux liquides sur silicium, LCoS.

6. Système de projection selon la revendication 1, dans lequel la surface d'émission comprend des diodes électroluminescentes, LED.
